# EUROPÄISCHE PATENTANMELDUNG

(11) **EP 2 431 648 A1**
(43) Veröffentlichungstag der Anmeldung: **21.03.2012**
(21) Anmeldenummer: 11005499.6
(22) Anmeldetag: 06.07.2011
(51) Int. Cl.: F16L 55/05, F16L 55/052

(54) **Leitungselement**

(30) Priorität: 16.09.2010 DE 102010045714
(71) Anmelder: NORMA Germany GmbH, 63477 Maintal (DE)
(72) Erfinder: Bauer, Andreas, 63477 Maintal (DE); Rastetter, Marc, 63599 Biebergemünd (DE); Mann, Stephan, 63599 Biebergemünd (DE); Semmel, Patrick, 63589 Linsengericht (DE)
(74) Vertreter: Knoblauch, Andreas

(57) **Zusammenfassung**

Die Erfindung betrifft ein Leitungselement (1), das eine Fluidleitung (2) und ein Gehäuse (3) aufweist. Zwischen dem Gehäuse (3) und der Fluidleitung (2) ist ein Ringraum (4) ausgebildet, der zumindest teilweise mit einem kompressiblen Medium gefüllt ist. Die Fluidleitung (2) weist innerhalb des Ringraums (4) mindestens eine Öffnung (13) auf, die den Ringraum (4) mit einem Innenraum (14) der Fluidleitung (2) verbindet.

## Beschreibung

Die Erfindung betrifft ein Leitungselement, das eine Fluidleitung und ein Gehäuse aufweist.

Derartige Leitungselemente dienen beispielsweise in Kraftfahrzeugen zum Leiten von Kühlwasser oder als so genannte Urea-Leitungen. Als UREA-Leitungen werden Leitungen bezeichnet, die zur Zufuhr von beispielsweise Harnstoff dienen, um zu einer sauberen Verbrennung bei Dieselmotoren beizutragen.

Bei mit Flüssigkeit gefüllten Fluidleitungen besteht insbesondere bei Kraftfahrzeugen im Winter das Problem, dass bei längerer Standzeit der Kraftfahrzeuge das in den Leitungen befindliche Fluid gefrieren kann. UREA friert beispielsweise bei -11°C ein.

Durch das Gefrieren der Flüssigkeiten erfolgt eine Volumenvergrößerung und damit eine Druckbelastung der Leitungen. Schlimmstenfalls kann es dadurch zu einer Beschädigung der Leitungen oder zu einer Beschädigung von Verbindungselementen der Leitungen kommen.

Um das Einfrieren zu verhindern, ist es bekannt, die Leitungen zu beheizen. Allerdings kann eine Beheizung nicht über einen längeren Zeitraum, in dem ein Kraftfahrzeug steht, aufrecht erhalten bleiben. Durch das Beheizen kann ein Einfrieren also nicht zu verlässig verhindert werden.

Der Erfindung liegt die Aufgabe zugrunde, das Risiko des Auftretens von Beschädigungen beim Gefrieren eines Fluids zu verringern.

Erfindungsgemäß wird diese Aufgabe durch ein Leitungselement der eingangs genannten Art dadurch gelöst, dass das Gehäuse die Fluidleitung radial fluiddicht umgibt, wobei zwischen der Fluidleitung und dem Gehäuse ein Ringraum ausgebildet ist, der zumindest teilweise mit einem kompressiblen Medium gefüllt ist, wobei die Fluidleitung innerhalb des Ringraums mindestens eine Öffnung aufweist.

Innerhalb des Gehäuses ist also sozusagen ein Druckausgleichsraum zur Verfügung gestellt, so dass ein Druck, der beim Gefrieren des Fluids in der Fluidleitung erzeugt wird, in den Ringraum ausweichen kann. Dabei erfolgt eine Volumenverringerung des kompressiblen Mediums. Die Fluidleitung selbst wird dadurch druckentlastet. Dabei wird durch das kompressible Medium im flüssigen Zustand des Fluids verhindert, dass der Ringraum vollständig mit dem Fluid gefüllt wird. Durch diese Ausgestaltung wird ein durch das Gefrieren des Fluids auf das Leitungselement ausgeübter Druck so weit verringert, dass keine Beschädigungen der Fluidleitung beziehungsweise des Leitungselements auftreten. Insbesondere werden dabei Druckspitzen abgebaut. Das kompressible Medium sollte dabei bei den üblichen Minusgraden natürlich seine gewünschte Kompressibilität behalten. Das Leitungselement ist also als Druckausgleichselement ausgebildet.

Vorzugsweise ist die Öffnung zu axialen Begrenzungen des Ringraums beabstandet. Insbesondere ist dabei die Öffnung mittig zwischen den axialen Begrenzungen angeordnet, weist also einen gleichen Abstand zur jeweiligen Begrenzung auf. Dadurch wird eine Lageunabhängigkeit des Leitungselements erreicht. Unabhängig von der Lage des Leitungselements kann der Ringraum nicht vollständig mit Fluid gefüllt werden.

Dabei ist bevorzugterweise das kompressible Medium durch im Gehäuse eingeschlossene Luft gebildet. Diese Luft befindet sich vor Befüllen des Leitungselements im ganzen Ringraum. Beim Einleiten des Fluids in die Fluidleitungen tritt das Fluid durch die Öffnung in den Ringraum ein, wobei zunächst durch diese Öffnung auch im Ringraum enthaltene Luft entweichen kann. Wenn die Fluidleitung so weit gefüllt ist, dass die Öffnung vollständig abgedeckt ist, kann die noch im Ringraum befindliche Luft nicht mehr entweichen, da das Gehäuse fluiddicht mit der Fluidleitung verbunden ist. Diese eingeschlossene Luft bildet dann das kompressible Medium. Durch diese Ausgestaltung ist eine sehr kostengünstige Herstellung des Leitungselements möglich. Auch erfolgt keine Verunreinigung des Fluids durch das kompressible Medium.

In einer anderen bevorzugten Ausführungsform ist das kompressible Medium als Schaum, insbesondere als geschlossenporiger Schaum ausgebildet. Der Ringraum kann dann vollständig mit dem Schaum ausgebildet sein. Unter Druck erfolgt eine Komprimierung des Schaums und damit ein Druckabbau in der Fluidleitung. Bei einem geschlossenporigen Schaum erfolgt dabei keine Aufnahme des Fluids. Durch diese Ausgestaltung lässt sich die Kompressibilität des Mediums relativ gut einstellen.

In einer weiteren bevorzugten Ausführungsform weist das kompressible Medium einen elastischen Behälter auf, in dem ein kompressibles Fluid, insbesondere Luft eingeschlossen ist. Dieser Behälter ist dabei im Ringraum angeordnet. Bei einem Druckanstieg in der Fluidleitung wird dieser Druck durch die Öffnung auf den elastischen Behälter übertragen, der dadurch komprimiert wird. Dadurch erfolgt eine Verringerung des in der Fluidleitung herrschenden Drucks.

Vorzugsweise ist das Gehäuse als Ringhülse ausgebildet, wobei die axialen Begrenzungen als Ringflansche ausgebildet sind. Gegebenenfalls sind die Ringflansche stoffschlüssig mit der Fluidleitung verbunden, wobei sie insbesondere einstückig mit der Fluidleitung ausgebildet sind. Die Herstellung einer Ringhülse ist relativ einfach. Dabei ist eine Umfangsfläche der Ringhülse vollständig geschlossen, also auf jeden Fall fluiddicht. Eine Abdichtung der Ringflansche zu der Fluidleitung ist durch die stoffschlüssige oder sogar einstückige Verbindung sichergestellt. Die Hülse kann nun mittels Presspassung auf die Ringflansche aufgeschoben worden sein, wodurch möglicherweise schön eine ausreichende Dichtigkeit erreicht wird. Dies ist insbesondere dann der Fall, wenn entweder die Ringflansche oder die Ringhülse aus einem relativ weichen Material gebildet sind.

Vorteilhafterweise ist zwischen dem Gehäuse und den Ringflanschen jeweils ein Dichtelement angeordnet. Durch dieses Dichtelement wird eine fluiddichte Verbindung zwischen der Ringhülse und den Ringflanschen sichergestellt.

Vorzugsweise ist die Öffnung als Ringspalt ausgebildet. Die Fluidleitung ist also sozusagen zweiteilig, wobei die beiden Teile durch den Ringspalt getrennt sind. Allerdings wird die Fluidleitung dabei durch das Gehäuse zusammengehalten. Gegebenenfalls können dabei noch weitere Sicherungsmittel vorgesehen sein, um ein axiales Entfernen der Fluidleitungsteile aus dem Gehäuse zu verhindern. Die Ausbildung eines Ringspalts ist relativ einfach. Beispielsweise kann die Fluidleitung zwischen den beiden Ringflanschen einfach durchgeschnitten werden, wobei anschließend das Gehäuse angebracht wird.

In einer anderen bevorzugten Ausführungsform sind drei, vier oder mehr Öffnungen vorgesehen, die axial auf gleicher Höhe in der Fluidleitung ausgebildet sind, wobei die Öffnungen gegebenenfalls gleichmäßig über einen Umfang der Fluidleitung verteilt sind. Durch die Verwendung mehrerer Öffnungen kann insgesamt ein relativ großer Querschnitt zum Hinströmen des Fluids in den Ringraum zur Verfügung gestellt werden, ohne dass die Fluidleitung geteilt werden muss. Indem nun diese Öffnungen alle auf gleicher Höhe angeordnet sind, ist insbesondere dann, wenn sie auch gleichmäßig über einen Umfang der Fluidleitung verteilt sind, unabhängig von der Lage ein gleichmäßiges Befüllen des Ringraums durch das Fluid gewährleistet. Es wird also immer eine gleich große Menge an Luft im Ringraum eingeschlossen. Bei vier Öffnungen liegen sich dabei jeweils zwei Öffnungen diametral gegenüber.

Vorzugsweise weist die Fluidleitung an mindestens einem Ende eine Anschlussgeometrie, insbesondere einen Einsteckbereich auf. Das Leitungselement kann dann relativ einfach mit anderen Leitungselementen verbunden werden. Dabei kann die Anschlussgeometrie axial aus dem Gehäuse herausragen. Beide Enden der Fluidleitung können gleich ausgebildet sein. Wenn beispielsweise beide Enden der Fluidleitung als Einsteckbereich ausgebildet sind, der jeweils aus dem Gehäuse axial herausragt, kann das Leitungselement als Verbindungselement zwischen zwei Schlauchenden eingesetzt werden. Die Schlauchenden werden dann einfach über den Einsteckbereich geführt und gegebenenfalls mit Hilfe von Schlauchschellen gesichert. Das Leitungselement kann dadurch auch relativ einfach nachträglich ergänzt werden.

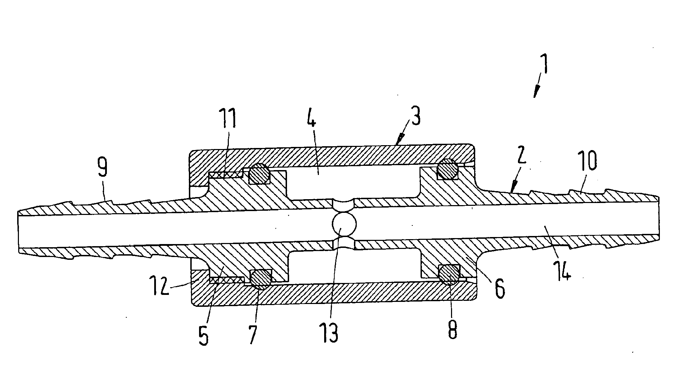

Die Erfindung wird im Folgenden anhand eines bevorzugten Ausführungsbeispiels in Verbindung mit der Zeichnung näher beschrieben. Hierin zeigt die einzige Figur:
einen Querschnitt durch ein Leitungselement.

In der einzigen Figur ist ein Leitungselement 1 mit einer Fluidleitung 2 dargestellt, wobei ein Gehäuse 3 die Fluidleitung 2 ringförmig umgibt. Zwischen dem Gehäuse 3 und der Fluidleitung 2 ist ein Ringraum 4 ausgebildet, der in Axialrichtung durch jeweils einen Ringflansch 5, 6 begrenzt ist. Die Ringflansche 5, 6 sind einstückig mit der Fluidleitung 2 ausgebildet.

Das Gehäuse 3 ist als Ringhülse ausgebildet, weist also eine vollständig geschlossene Umfangsfläche auf. Zwischen den Ringflanschen 5, 6 und dem Gehäuse 3 ist jeweils ein Dichtelement 7, 8 angeordnet, wobei die Dichtelemente als Ringdichtungen ausgebildet sind.

Die Fluidleitung 2 durchdringt in Axialrichtung das Gehäuse 3 und steht auf beiden Seiten des Gehäuses 3 etwa gleich weit über. Dieser überstehende Bereich der Fluidleitung 2 ist bei diesem Ausführungsbeispiel auf beiden Seiten mit einer gleich ausgebildeten Anschlussgeometrie 9, 10 versehen. Die Anschlussgeometrie 9, 10 ist hierbei als Einsteckbereich ausgebildet, kann also beispielsweise in ein Schlauchende eingeführt werden. Das Gehäuse 3 ist in Axialrichtung über die Fluidleitung 2 aufgeschoben worden, wobei zwischen dem Ringflansch 5 und dem Gehäuse 3 ein Sprengring 11 angeordnet ist, der eine reibschlüssige Verbindung zwischen dem Gehäuse 3 und der Fluidleitung 2 sicherstellt. Das Gehäuse 3 ist an einer Stirnseite mit einem nach innen ragenden Flansch versehen, der als Einschubbegrenzung dient und im dargestellten, montierten Zustand an einer axialen Außenseite des Ringflansches 5 anliegt. Dadurch wird die Lage des Gehäuses 3 gegenüber der Fluidleitung 2 genau definiert. Ein Entfernen des Gehäuses 3 ist auch nur in eine vorgegebene Richtung möglich. Eine unbeabsichtigte Verstellung ist daher unwahrscheinlich.

Die Fluidleitung 2 ist mit insgesamt vier Öffnungen 13 versehen, die einen Innenraum 14 der Fluidleitung 2 mit dem Ringraum 4 verbinden. Die Öffnungen 13 sind dabei alle auf gleicher axialer Höhe bezüglich der Fluidleitung angeordnet. Dabei sind die Öffnungen 13 von beiden Ringflanschen 5, 6 beabstandet, die die axiale Begrenzung des Ringraum 4 bilden. Unabhängig von der Lage des Leitungselements 1 kann der Ringraum. 4 also nicht vollständig mit einem Fluid gefüllt werden, das durch den Innenraum 14 und die Öffnungen 13 in den Ringraum 3 gelangt.

Im Auslieferungszustand sind der Innenraum 14 und der Ringraum 4 mit Luft gefüllt. Wird das Leitungselement 1 nun in einer Leitung verwendet und mit einem Fluid befüllt, füllt sich der Innenraum 14 und Fluid gelangt über die Öffnungen 13 auch in den Ringraum 4. Dabei kann so lange, wie die Öffnungen 13 noch nicht vollständig mit Fluid bedeckt sind, ein im Innenraum 4 befindliches Luftvolumen durch die Öffnungen 13 entweichen. Ein vollständiges Entweichen der im Ringraum eingeschlossenen Luft ist allerdings nicht möglich. Vielmehr wird die Luft im Ringraum 4 zwischen der fluiddichten Verbindung von Gehäuse 3 und Fluidleitung 2 und dem in der Fluidleitung 2 angeordneten Fluid festgehalten.

Beginnt das Fluid nun zu gefrieren, vergrößert sich dessen Volumen. Da die im Ringraum 4 befindliche Luft ein kompressibles Medium darstellt, kann durch die Öffnungen 13 ein Druckausgleich unter Komprimierung der Luft erfolgen. Die durch das Gefrieren des Fluids auf das Leitungselement 1 einwirkende Druckbelastung wird dadurch verringert.

Bei dem gezeigten Ausführungsbeispiel wird als kompressibles Medium die im Gehäuse eingeschlossene Luft verwendet. Zusätzlich oder anstelle der Luft kann auch ein Schaum oder ein elastischer mit einem Gas gefüllter Behälter oder beispielsweise auch eine Gummistruktur verwendet werden, die im Ringraum 4 angeordnet ist. Auch dadurch lässt sich ein gefährlicher Druckanstieg im Leistungselement 1 durch Gefrieren des durch das Leitungselement 1 geführten Fluids vermeiden.

Andere Anschlussgeometrien der Fluidleitung 2 sind ebenfalls denkbar. Es ist auch nicht unbedingt erforderlich, dass das Gehäuse axial kürzer ausgebildet ist als die Fluidleitung. Vielmehr kann das Gehäuse beispielsweise auch die Anschlussgeometrie überragen und so vor Umwelteinflüssen schützen.

Anstelle der gezeigten vier Öffnungen können beispielsweise auch eine andere Anzahl von Öffnungen, wie zum Beispiel drei oder fünf Öffnungen, verwendet werden. Es ist auch möglich, anstelle der Öffnungen einen Ringspalt vorzusehen. Dann ist allerdings eine entsprechende axiale Lagesicherung der Teile der Fluidleitung innerhalb des Gehäuses erforderlich.

Durch die erfinderische Ausgestaltung wird zwischen der Fluidleitung und dem Gehäuse ein fluiddichter Ringraum zur Verfügung gestellt, der zum Druckausgleich für den Fall dient, dass ein durch die Fluidleitung 2 geführtes Fluid gefriert. Die durch das Gefrieren des Fluids auf das Leitungselement ausgeübte Druckbelastung wird dadurch vermindert, so dass sie in einem unkritischen Bereich bleibt, in dem eine Beschädigung des Leitungselements nicht zu erwarten ist. Auch einer Beschädigung benachbarter Elemente wird dadurch vorgebeugt.

## Patentansprüche

1. Leitungselement (1), das eine Fluidleitung (2) und ein Gehäuse (3) aufweist, das die Fluidleitung (2) radial fluiddicht umgib, wobei zwischen der Fluidleitung (2) und dem Gehäuse (3) ein Ringraum (4) ausgebildet ist, der zumindest teilweise mit einem kompressiblen Medium gefüllt ist, wobei die Fluidleitung (2) innerhalb des Ringraums (4) mindestens eine Öffnung (13) aufweist.

2. Leitungselement nach Anspruch 1, **dadurch gekennzeichnet, dass** die Öffnung (13) zu axialen Begrenzungen (5, 6) des Ringraums beabstandet ist.

3. Leitungselement nach Anspruch 1 oder 2, **dadurch gekennzeichnet, dass** das kompressible Medium durch im Gehäuse (3) eingeschlossene Luft gebildet ist.

4. Leitungselement nach Anspruch 1 oder 2, **dadurch gekennzeichnet, dass** das kompressible Medium als Schaum, insbesondere als geschlossenporiger Schaum ausgebildet ist.

5. Leitungselement nach Anspruch 1 oder 2, **dadurch gekennzeichnet, dass** das kompressible Medium einen elastischen Behälter aufweist, in dem ein kompressibles Fluid, insbesondere Luft, eingeschlossen ist.

6. Leitungselement nach einem der Ansprüche 1 bis 5, **dadurch gekennzeichnet, dass** das Gehäuse (3) als Ringhülse ausgebildet ist, wobei die axialen Begrenzungen (5, 6) als Ringflansche ausgebildet sind, die gegebenenfalls stoffschlüssig mit der Fluidleitung (2) verbunden sind, insbesondere einstückig mit der Fluidleitung 2 ausgebildet sind.

7. Leitungselement nach Anspruch 6, **dadurch gekennzeichnet, dass** zwischen dem Gehäuse (3) und den Ringflanschen (5, 6) jeweils ein Dichtelement (7, 8) angeordnet ist.

8. Leitungselement nach einem der Ansprüche 1 bis 7, **dadurch gekennzeichnet, dass** die Öffnung (13) als Ringspalt ausgebildet ist.

9. Leitungselement nach einem der Ansprüche 1 bis 7, **dadurch gekennzeichnet, dass** drei, vier oder mehr Öffnungen (13) axial auf gleicher Höhe in der Fluidleitung ausgebildet sind, wobei die Öffnungen (13) gegebenenfalls gleichmäßig über einen Umfang der Fluidleitung verteilt sind.

10. Leitungselement nach einem der Ansprüche 1 bis 9, **dadurch gekennzeichnet, dass** die Fluidleitung (2) an mindestens einem Ende eine Anschlussgeometrie (9, 10), insbesondere einen Einsteckbereich aufweist.
